# EUROPEAN PATENT APPLICATION

(11) **EP 4 671 804 A1**
(43) Date of publication of application: **31.12.2025**
(21) Application number: 25184252.2
(22) Date of filing: 20.06.2025
(51) Int. Cl.: G01S 5/02, G01S 11/02

(54) **RANGING TECHNIQUES USING ULTRA-WIDEBAND AND NARROWBAND COMMUNICATIONS**

(30) Priority: 28.06.2024 US 202463665654 P; 05.05.2025 US 202519198797
(71) Applicant: QORVO US, INC., Greensboro, NC 27409 (US)
(72) Inventor: COLAFRANCESCO, Julien, 92120 Montrouge (FR)
(74) Representative: D Young & Co LLP

(57) **Abstract**

Systems, methods, and devices for combining narrowband and ultra-wideband (UWB) communication to provide enhanced ranging are disclosed. In an example aspect, a method of ranging is disclosed. In some embodiments, the method includes generating a coarse distance estimate using narrowband communications. The method may further include generating a channel impulse response (CIR) estimate using UWB communications; and estimating a distance between a first device and a second device based on the coarse distance estimate and the CIR estimate.

## Description

### RELATED PATENT APPLICATIONS

This application claims priority to U.S. Provisional Patent Application No. 63/665,654 filed June 28, 2024, which is incorporated by reference herein in its entirety.

### TECHNICAL FIELD

The present disclosure relates generally to ranging techniques that use ultra-wideband and/or narrowband communications.

### BACKGROUND

Narrowband communication technologies, such as Bluetooth and Bluetooth Low energy (BLE), is popular for low-power data communication. For example, BLE may achieve low power consumption by keeping the radio off as much as possible and sending small amount of data at a low transfer speed.

Ultra-wideband (UWB) technology is popular for its precision in ranging measurements, often achieving accuracy below 10 centimeters (cm). As examples, the FiRa Consortium and IEEE 802.15.4 standards describe various UWB ranging protocols and use cases. However, UWB's functionality may be hindered by regulatory limits on transmission power, set at -41.3 dBm/MHz in some circumstances, for example. These constraints can impact UWB's maximum measurable distance and the ability for UWB signals to penetrate obstacles that may exist between a transmitter and a receiver in the signal path in so-called non-line-of-sight (NLOS) communication scenarios.

Alternatively, narrowband technologies, such as BLE, may operate at higher power levels but with lower accuracy and precision in ranging, as compared with UWB technologies. For example, BLE has been proposed with distance measurement capability, which may be referred to as high accuracy distance measurement (HADM) or channel sounding. In some circumstances, BLE with HADM may operate at a much higher power level than UWB (e.g., greater than 10 dBm/MHz) but with lower ranging accuracy, such as around 1 meter.

A key challenge with these technologies is to provide accurate ranging in a variety of communication environments and distances, while still complying with regulatory requirements.

### SUMMARY

Particular aspects are set out in the appended independent claims. Various optional embodiments are set out in the dependent claims. Embodiments of the present disclosure include systems, methods, and devices for combining narrowband and UWB communication to provide enhanced ranging.

In an example aspect, a method of ranging is disclosed. In some embodiments, the method includes generating a coarse distance estimate, e.g., using narrowband communications. The method may further include generating a channel impulse response (CIR) estimate using UWB communications; and estimating a distance between a first device and a second device based on the coarse distance estimate and the CIR estimate.

In another example aspect, a wireless communication device is disclosed. In some embodiments, the wireless communication device discloses a transceiver, e.g., a narrowband transceiver, configured to generate a coarse distance estimate, e.g., using narrowband communications. The wireless communication device may further include an UWB transceiver configured to generate a CIR estimate using UWB communications; and a processor configured to estimate a distance between a first device and a second device based on the coarse distance estimate and the CIR estimate.

In another example aspect, a computer-readable medium (CRM) having program code encoded thereon is disclosed. In some embodiments, the program code includes code for causing a first wireless communication device to generate a coarse distance estimate, e.g., using narrowband communications. The program code may further include code for causing the first wireless communication device to generating a CIR estimate using UWB communications; and code for causing the first wireless communication device to estimate a distance between the wireless communication device and a second wireless communication device based on the coarse distance estimate and the CIR estimate.

Additional aspects, features, and advantages of the present disclosure will become apparent from the following detailed description.

### BRIEF DESCRIPTION OF THE DRAWINGS

The accompanying drawing figures incorporated in and forming a part of this specification illustrate several aspects of the disclosure, and together with the description, serve to explain the principles of the disclosure.
FIG. 1. illustrates an example of a ranging technique to determine distance between two communication devices, according to some aspects of the present disclosure.
FIG. 2 illustrates an example of a method of detecting the distance using the hybrid system, which is a combination of UWB and NB technology, according to some aspects of the present disclosure.
FIG. 3 illustrates the structure of a hybrid communication device in a two-way ranging application, according to some aspects of the present disclosure.
FIG. 4 illustrates an example of a UWB transceiver, according to some aspects of the present disclosure.
FIG. 5 illustrates an example of a UWB receiver, according to some aspects of the present disclosure.

### DETAILED DESCRIPTION

For the purposes of promoting an understanding of the principles of the present disclosure, reference will now be made to the embodiments illustrated in the drawings, and specific language will be used to describe the same. It is nevertheless understood that no limitation to the scope of the disclosure is intended. Any alterations and further modifications to the described devices, systems, and methods, and any further application of the principles of the present disclosure are fully contemplated and included within the present disclosure as would normally occur to one skilled in the art to which the disclosure relates. In particular, it is fully contemplated that the features, components, and/or steps described with respect to one embodiment may be combined with the features, components, and/or steps described with respect to other embodiments of the present disclosure. For the sake of brevity, however, the numerous iterations of these combinations will not be described separately.

Systems, methods, and devices are presented herein for ranging and sensing by combining both narrowband and UWB technologies. Ranging techniques can involve estimation of distance between devices. In two-way ranging and localization, the existence of obstacles between communication devices, resulting in a NLOS condition, can lead to inaccurate distance and/or location estimates. Techniques presented herein may be viewed as enhancing the ranging capabilities of UWB using assistance from NB techniques, such as BLE, including in NLOS conditions. For example, robust distance estimation may be achieved by refining coarse distance estimates from a BLE unit using the UWB technology. Techniques presented herein are based on a combination of the advantages of both types of communication systems to get a reliable solution.

In some aspects, a hybrid BLE/UWB system is described that leverages strengths of both technologies. In some embodiments, BLE HADM may be employed to obtain a coarse distance estimate, which is refined using UWB. This approach not only improves the robustness of distance measurements in complex environments with multiple obstacles but also enhances the system's resilience in NLOS conditions. Techniques presented herein do not require tight synchronization between UWB and narrowband radios, distinguishing them from existing narrowband assist technologies.

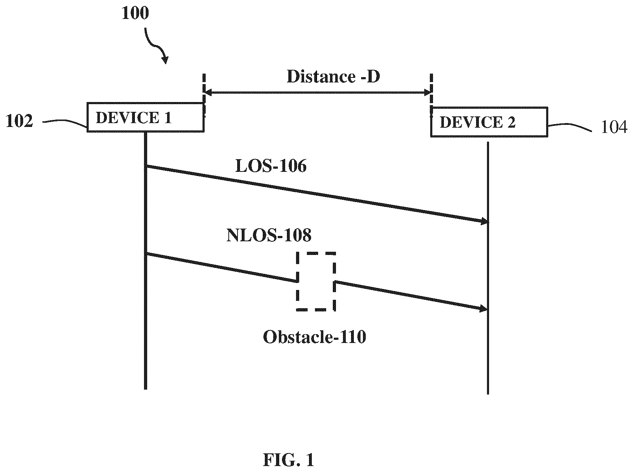

FIG. 1 illustrates an example of a system 100 to determine a distance between two wireless communication devices 102 and 104, according to some aspects of the present disclosure. In this example, the device 102 and device 104 are located a certain distance apart, represented as "D" in FIG. 1. The devices 102 and 104 may represent communication devices in a ranging or sensing scenario, having a combination of UWB and NB communication capability. FIG. 1 illustrates signal transmission during a line of sight (LOS) condition 106, where no obstacles are located between the devices 102, 104. FIG. 1 also illustrates signal transmission in a NLOS condition 108. A NLOS condition may be present when an obstacle 110 is located between two devices.

In the LOS condition 106, there may be no obstacles between two devices 102 and 104. The transmitted signal may travel only through air without any attenuation, and a signal path may be unobstructed. In the NLOS condition 108, at least one obstacle 110 may exists between the devices. The obstacle 110 can be any physical entity such as furniture, a wall, a door, or even human beings. In a NLOS condition, a signal path may be obstructed by one or more obstacles 110.

Although not shown, the communication between devices 102, 104 may be bidirectional. For example, two-way ranging applications typically employ a protocol that involves a series of messages communicated from a first device to a second device and from the second device to the first device.

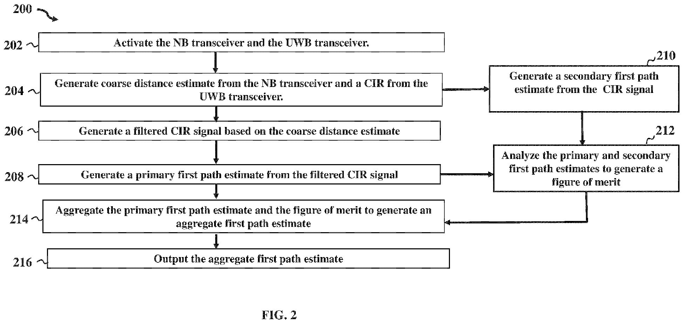

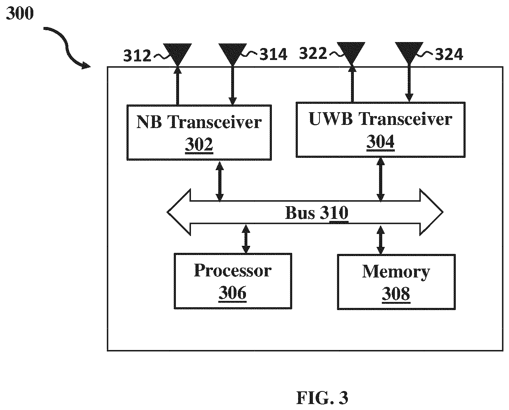

FIG. 2 illustrates a method 200 of estimating a distance between two communication devices having both narrowband and UWB capability, according to some aspects of the present disclosure. FIG. 3 illustrates an example wireless communication device 300 that includes both narrowband (NB) and UWB communication capability, according to some aspects of the present disclosure. In this example, the device 300 includes a NB transceiver 302 and a UWB transceiver 304. The device 300 may further include one or more NB transmit antennas 312, one or more NB receive antennas 314, one or more UWB transmit antennas 322, and one or more NB receive antennas 324. As would be understood in the art, as an alternative, an antenna may be used for both transmission and reception, such that there may be only one NB antenna and one UWB antenna. The NB transceiver 302 may also be referred to as a NB module, and the UWB transceiver 304 may also be referred to as a UWB module.

In some embodiments, the NB transceiver 302 provides BLE communication capability including implementing all layers of the BLE protocol stack. In some embodiments, the NB transceiver 302 provides another type of NB communication capability. In some embodiments, the UWB transceiver 304 provides UWB communication capability including implementing all layers of the UWB protocol stack. The NB transceiver 302 may be implemented on a single chip, and the UWB transceiver 304 may also be implemented on a single chip. The chips may be separate, or the BLE and UWB capability may be implemented together on a single chip. Each of the transceivers 302, 304 may include analog and digital circuitry for transmitting and/or receiving messages at the physical layer.

The device 300 may further include a processor 306 and a memory 308. Processor 306 may be used to control and activate/deactivate NB transceiver 302 and UWB transceiver 304. Memory 308 may include one or more non-transitory storage devices that may include local and/or network accessible storage, a disk drive, a drive array, an optical storage device, a solid-state storage device such as a random access memory (RAM) and/or a read-only memory (ROM), a programmable ROM, a flash-updateable ROM, and/or the like. Such storage devices may be configured to implement any appropriate data storage, including without limitation, various file systems, database structures, and/or the like. The memory 308 may be a non-transitory computer-readable medium used for storing programming instructions and other computer code for carrying out various steps described herein, such as the steps described herein with respect to the method 200. Additionally, or alternatively, a computer-readable medium can include transient media such as carrier waves and transmission media.

The hardware components of device 300 may be communicatively coupled to bus 310. In some embodiments, bus 310 can be used for processor 306 to communicate between cores and/or with memory 308. Processor 306 may include one or more general-purpose processors and/or one or more special-purpose processors (such as digital signal processing chips, graphics acceleration processors, and/or the like).

The device 300 is configured to communication with another device also having NB and UWB capability. For example, each of devices 102 and 104 may be configured as device 300.

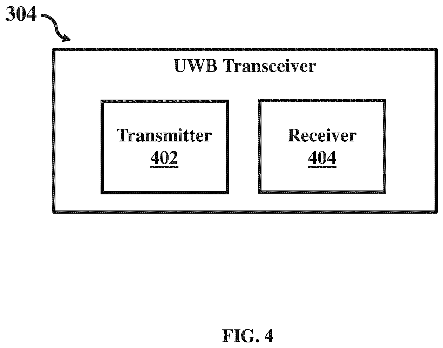

FIG. 4 is a more detailed diagram of UWB transceiver 304, according to some aspects of the present disclosure. In some embodiments, UWB transceiver 304 may include a transmitter 402 and a receiver 404. The transmitter 402 and receiver 404 may be implemented as separate modules or may be integrated into a single module.

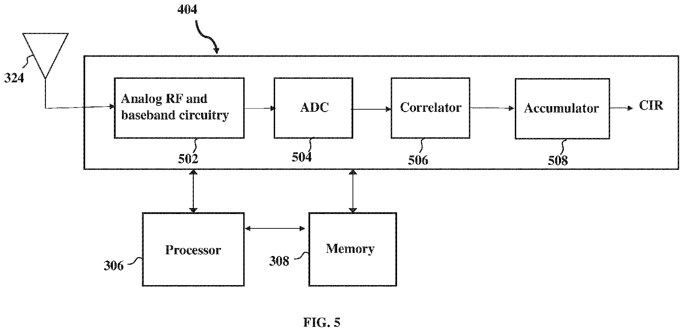

FIG. 5 is a more detailed diagram of an example UWB receiver, such as UWB receiver 404, according to some aspects of the present disclosure. As illustrated in FIG. 5, the receiver 404 may include an analog radio frequency (RF) and baseband (BB) processing circuit 502 that takes a received RF signal (e.g., a received packet) and provides traditional front-end processing (e.g., amplification, filtering, down conversion to a BB frequency) and passes a baseband signal to an analog-to-digital converter (ADC) 504. A sampled signal is passed to a correlator 506. The correlator 506 correlates the sampled signal with a known sequence, such as a preamble sequence. An example of a preamble sequence is one of known Ipatov sequences. After correlation, the resulting signal may be accumulated by an accumulator 508. This accumulated signal may then be used to provide a channel estimate (e.g., a channel impulse response, or CIR, estimate) from which the processor 404 may calculate a first path position, a time of arrival (ToA), and/or a distance to an object, such as another communication device (e.g., as shown in FIG. 1). Alternatively, the receiver 404 may send information related to the accumulated signal back to a separate transmitter, if the transmitter is not co-located with the receiver, and the transmitter device may perform calculations to estimate a distance.

The communication device 300 may further represent a smartphone or other device, that also implements Bluetooth, Wi-Fi, cellular, and/or other communication capability, such as by including one or more chips or processors that implement this capability.

Returning to FIG. 2, the method 200 is now described in more detail. An example of the NB transceiver used in the method is NB transceiver 302, and an example of the UWB transceiver used in the method is UWB transceiver 304. In step 202, both the NB transceiver and the UWB transceiver in the communication device are activated and readied to initiate communication to determine a distance between the device (e.g., device 102) and another device (e.g., device 104). For example, in the device 300, the NB transceiver 302 and the UWB transceiver 304 are activated.

During the course of communication, in step 204 the NB transceiver performs a coarse or raw distance estimate. For example, the NB transceiver may be implemented as a BLE transceiver that engages in a channel sounding or uses that HADM with another device having a BLE transceiver to estimate the distance between devices. Also in step 204, the UWB transceiver estimates a channel impulse response (CIR). For example, the CIR can be estimated using the UWB receiver 404 as described previously. The remaining steps are one embodiment for estimating the distance between the device and another device based on the CIR (from UWB communications) and the coarse distance estimate (from NB communications).

In step 206, both coarse distance estimate and CIR estimate may be fed to module that may be referred to as a distance fusion unit to generate a filtered CIR. For example, a processor, such as a processor 306 may be configured to generate the filtered CIR and may implement a distance fusion unit. For example, in step 206, the CIR produced from step 204 may be windowed and centered on the coarse distance estimate produced by the NB transceiver to yield a filtered CIR. The size of the window is a parameter that may be set in a predetermined manner or may be set dynamically according to the energy in the CIR signal. Alternatively, the coarse distance estimate may appear within the window and the window centered to capture a maximum energy of the CIR.

In step 208, the filtered CIR is further processed to determine a primary first path estimate. For example, the primary first path estimate may be identified as the position of the first peak (e.g., position in time of the largest magnitude) of the filtered CIR, or the first peak of the CIR that also exceeds a noise level. The primary first path estimate may also be referred to the robust first path estimate. The noise level may be estimated using conventional techniques.

The CIR signal generated at step 204 can also be processed at step 210. In step 210, another first path estimate, referred to as a secondary first path estimate is generated. For example, the secondary first path estimate may be the first path estimate obtained using UWB only, with no input from the NB transceiver. The secondary first path estimate may also be referred to as a weak first path estimate. Steps 208 and 210 may be performed in a processor, such as processor 306. Step 210 may alternatively be performed in a UWB transceiver (such as UWB transceiver 304).

In step 212, the initial first path estimate and the secondary first path estimate are compared to determine a figure of merit, which may also be referred to as a path metric. For example, a determination may be made whether the initial first path estimate is equal to the secondary first path estimate, and the figure of merit/path metric may be a simple Boolean value in which one logic value is used if the estimates are equal (or estimates are within an error tolerance of each other, such as differing by less then 1%, 5%, etc.) and another logic value if the estimates are not equal. Other figures of merit/path metrics may be used, such as taking a difference between the first path estimates or a square of the difference between the first path estimates.

In step 214, the initial first path estimate and the figure of merit are processed together to produce an aggregate first path estimate, which may also be referred to as a final first path estimate. Step 214 may be performed in a processor, such as processor 306. In step 216, the aggregate first path estimate can be sent to an output unit to display or process and display for the user. The aggregate first path estimate may also be stored for further processing or averaged with other aggregate first path estimates generated at different times between the same two devices. The aggregate first path estimate may be used in an application running on device for location estimation or distance estimation between devices. The aggregate first path estimate may be used to estimate the distance between devices because the aggregate first path may indicate a time of flight between communication devices, which may be translated in a distance.

In the method 200, ranging may be performed in different ways, such as using single-sided two-way ranging, double-sided two-way ranging, and/or with or without synchronization. Depending on the type of ranging used with UWB communication for example, the way a device may use a coarse distance estimate to refine the first path estimate may take different forms. For example, a coarse distance may be used to estimate a first path estimate from the final transmission of a double sided two-way ranging operation, making the hypothesis that other first path estimates for the poll and response (e.g., terms understood in the context of UWB two-way ranging) are satisfactory or good. As another example, using aggregated CIR and other data from UWB two-way ranging, the CIR and the time of reception related to a poll and response may be transmitted or saved for later use, and a device may proceed to a more fine-grained estimation based on: a coarse narrow band estimate, data coming from poll and response, and final CIR and associated transmission and reception times. In a scenario with synchronization between devices, the aggregated data needed may be reduced to two CIRs, plus associated transmission or reception times, such as in a single-sided two-way ranging context or eventually only a single transmission context such as in one way ranging. Thus, for example, in UWB ranging applications, a CIR used in method 200 (e.g., in step 204) may be obtained from one or more of a poll, and/or a response, and/or another transmission in single-sided two-way ranging or double-sided two-way ranging scenarios, or a CIR used in the method 200 may be aggregated from the CIR estimates of various UWB ranging transmissions.

The steps 206 through 216 may be performed in a processor, such as processor 306, that is coupled to the NB transceiver and the UWB transceiver.

The method 200 operates without the need for tight synchronization between the UWB and NB transceivers, unlike some existing UWB narrowband assist technologies.

There are other NB radio technologies that may be used other than BLE. For example, other 2.4 GHz NB radio technologies may be used, as well as higher frequency WiFi technologies. One advantage of using BLE is the advanced state of standardization of HADM/channel sounding approaches.

There are several alternative embodiments that are variations on the method 200 in FIG. 2. For example, UWB may be used to create a first set of distance hypotheses. BLE measurements may then help in eliminating erroneous hypotheses. As another example, as an alternative to step 204, the devices may adaptively decide whether to use UWB or BLE for distance estimation, based on a real-time analysis of environmental conditions such as NLOS or obstructions; or the system may evaluate the integrity of both UWB and BLE signals, enabling the system to prioritize the technology that offers the best signal quality at that moment in an approach that may be referred to as weighted fusion. In addition, the system may monitor and reduce interference between BLE and UWB signals, using techniques such as dynamic frequency selection or time-slotted operation. Also, the weighted fusion approach may be used opportunistically based on data collected during the use of 802.15.4ab narrow band assist features (like mirroring, and multi-millisecond ranging).

Thus, from one perspective, there have now been described systems, methods, and devices for combining narrowband and ultra-wideband (UWB) communication to provide enhanced ranging are disclosed. In an example aspect, a method of ranging is disclosed. In some embodiments, the method includes generating a coarse distance estimate using narrowband communications. The method may further include generating a channel impulse response (CIR) estimate using UWB communications; and estimating a distance between a first device and a second device based on the coarse distance estimate and the CIR estimate.

Persons skilled in the art will recognize that the apparatus, systems, and methods described above can be modified in various ways. Accordingly, persons of ordinary skill in the art will appreciate that the embodiments encompassed by the present disclosure are not limited to the particular example embodiments described above. In that regard, although illustrative embodiments have been shown and described, a wide range of modification, change, and substitution is contemplated in the foregoing disclosure. It is understood that such variations may be made to the foregoing without departing from the scope of the present disclosure. Accordingly, it is appropriate that the appended claims be construed broadly and in a manner consistent with the present disclosure.

## Claims

1. A method of ranging comprising:
generating a coarse distance estimate;
generating a channel impulse response (CIR) estimate using ultra-wideband (UWB) communications; and
estimating a distance between a first device and a second device based on the coarse distance estimate and the CIR estimate.

2. The method of claim 1, wherein estimating the distance further comprises:
generating a filtered CIR based on the coarse distance estimate;
generating a primary first path estimate based on the filtered CIR;
generating a secondary first path estimate based on the CIR;
generating a figure of merit based on the primary first path estimate and the secondary first path estimate;
generating a final first path estimate based on the primary first path estimate and the figure of merit; and
estimating the distance between the first device and the second device using the final first path estimate.

3. The method of claim 2, wherein the coarse distance estimate comprises Bluetooth Low Energy channel sounding.

4. The method of claim 2 or claim 3, wherein the filtered CIR is generated by windowing the CIR estimate using a window that includes the coarse distance estimate.

5. The method of claim 4, wherein the primary first path estimate is based on a first peak of the filtered CIR.

6. The method of claim 5, wherein the CIR estimate is generated by a UWB transceiver in the first device.

7. The method of claim 5 or claim 6, wherein the secondary first path estimate is based on a first peak of the CIR.

8. The method of any of claims 5 to 7, wherein the figure of merit is based on a difference between the primary first path estimate and the secondary first path estimate.

9. The method of any of claims 2 to 8, wherein the method is performed by the first device.

10. A wireless communication device comprising:
a transceiver configured to generate a coarse distance estimate;
an ultra-wideband (UWB) transceiver configured to generate a channel impulse response (CIR) estimate using UWB communications; and
a processor configured to estimate a distance between a first device and a second device based on the coarse distance estimate and the CIR estimate.

11. The wireless communication device of claim 10, wherein the processor is further configured to perform the following steps to estimate the distance:
generate a filtered CIR based on the coarse distance estimate;
generate a primary first path estimate based on the filtered CIR;
generate a secondary first path estimate based on the CIR;
generate a figure of merit based on the primary first path estimate and the secondary first path estimate;
generate a final first path estimate based on the primary first path estimate and the figure of merit; and
estimate the distance between the first device and the second device using the final first path estimate.

12. The wireless communication device of claim 11, wherein the generating of the coarse distance estimate comprises using Bluetooth Low Energy channel sounding.

13. The wireless communication device of claim 11 or claim 12, wherein the filtered CIR is generated by windowing the CIR estimate using a window that includes the coarse distance estimate.

14. The wireless communication device of claim 13, wherein the primary first path estimate is based on a first peak of the filtered CIR.

15. A computer-readable medium (CRM) having program code encoded thereon, the program code comprising:
code for causing a first wireless communication device to generate a coarse distance estimate;
code for causing the first wireless communication device to generating a channel impulse response (CIR) estimate using ultra-wideband (UWB) communications; and
code for causing the first wireless communication device to estimate a distance between the wireless communication device and a second wireless communication device based on the coarse distance estimate and the CIR estimate.
